# EUROPEAN PATENT APPLICATION

(11) **EP 4 679 129 A1**
(43) Date of publication of application: **14.01.2026**
(21) Application number: 24275081.8
(22) Date of filing: 11.07.2024
(51) Int. Cl.: G01S 7/40, F41J 2/00, F41J 2/02, F41J 9/02, H01Q 1/12

(54) **IMPROVEMENTS IN AND RELATING TO VIRTUAL TARGET GENERATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a virtual target generator system (100) for use with a RADAR system (300). The virtual target generator system (100) comprises a transport system arranged to permit an antenna (131a) of a virtual target generator to assume a given position with reference to the RADAR (300), such that a generated virtual target appears at a position dictated (at least in part) by the position of the antenna (131a).

## Description

### FIELD

The present invention relates to an improved virtual Target Generator (TG) for use in conjunction with a RADAR system.

### BACKGROUND

Virtual Target Generators are known in the art. In principle, they are able to generate a virtual or synthetic target in response to being illuminated by an active RADAR transmitter. In response to receiving a signal from the RADAR transmitter, the TG processes the received signal and, essentially, attenuates and delays the signal before retransmitting it in the direction of the RADAR transmitter. Typically, the unprocessed return from the TG is received too soon to be treated as a valid signal, since all RADAR systems have a minimum operational range, below which targets may not be detected. The RADAR transmitter has an associated RADAR receiver, which upon receipt of the delayed and attenuated transmission from the TG, regards the signal as an echo from a genuine target, received from the previously transmitted signal from the RADAR transmitter, whereas, in fact, it is a virtual target which has been generated by the TG.

By controlling the delay, the apparent distance of the target can be controlled. The greater the delay, the further away the target appears to be. Controlling the attenuation can control the apparent size of the target. The greater the attenuation, the smaller the target appears.

Some TGs are also able to Doppler process the received signal from the RADAR transmitter to simulate a particular radial velocity profile for the virtual target i.e. it can be made to appear to be travelling a given speed either toward or away from the RADAR receiver.

A problem with known TGs is that they are typically provided in a static configuration, such as mounted on a pole or other structure, meaning that the virtual target generated does not demonstrate a realistic movement profile.

It is an aim of embodiments of the present invention to address this and other shortcomings in the prior art, whether mentioned herein or not.

### SUMMARY

According to an aspect of the present invention, there is provided a virtual target generator system for use with a RADAR system. The virtual target generator system comprises a transport system arranged to permit an antenna for use with the virtual target generator to assume a given position with reference to the RADAR, such that a generated virtual target appears at a position dictated at least in part by the given position. This allows the virtual target generator system to generate virtual targets appearing from a greater range of locations

The transport system may be arranged to position the antenna of the virtual target generator to assume a position within a defined plane, wherein the plane is substantially orthogonal to a beam of a transmitter of the RADAR system.

The transport system may comprise a pair of cables, each connected to opposed sides of the antenna, and each cable is connected to a motor via a pulley system, thereby permitting movement of the antenna. This allows the position of the virtual target to be changed. Preferably, a pair of cables are connected to each side of the antenna and each of the pair of cables connected to each side is connected to its own motor via its own pulley system.

The antenna may be connected via an umbilical cable to a processing unit located in a static position.

The antenna may be further provided with at least one Infra-red source.

The virtual target generator system may comprise a plurality of antennas, each associated with one of a plurality of virtual target generators. This allows the virtual target generator system to generate multiple targets

The virtual target generator system may also comprise a Scenario Controller arranged to control the system, such that the virtual target appears to display one or more of a defined trajectory, position and speed. Preferably the Scenario Controller is further operable to validate a particular scenario by ensuring that the particular scenario is supported by a physical arrangement of the virtual target generator system.

In another example, there is provided a method of operating the virtual target generator system described above. The method comprises the steps of: a) illuminating an antenna of the target generator system with a transmission from a RADAR; b) processing the received RADAR transmission and transmitting the processed signal to the RADAR; c) receiving the processed signal at the RADAR and processing it as a genuine target; and d) moving the antenna to simulate the motion of the genuine target.

Preferably the method further comprises the step of validating a particular scenario to ensure that the particular scenario is supported by a physical arrangement of the virtual target generator system.

### BRIEF DESCRIPTION OF THE FIGURES

Embodiments of the invention will now be described by way of example only with reference to the figures, in which:
Figure 1a shows a schematic representation of a TG according to an embodiment of the invention;
Figure 1b shows a schematic representation of a TG according to another embodiment of the invention;
Figure 2 shows a representation of the generation of multiple virtual targets according to an embodiment of the invention; and
Figure 3 shows a flowchart representing a method of operation according to an embodiment of the invention.

### DETAILED DESCRIPTION

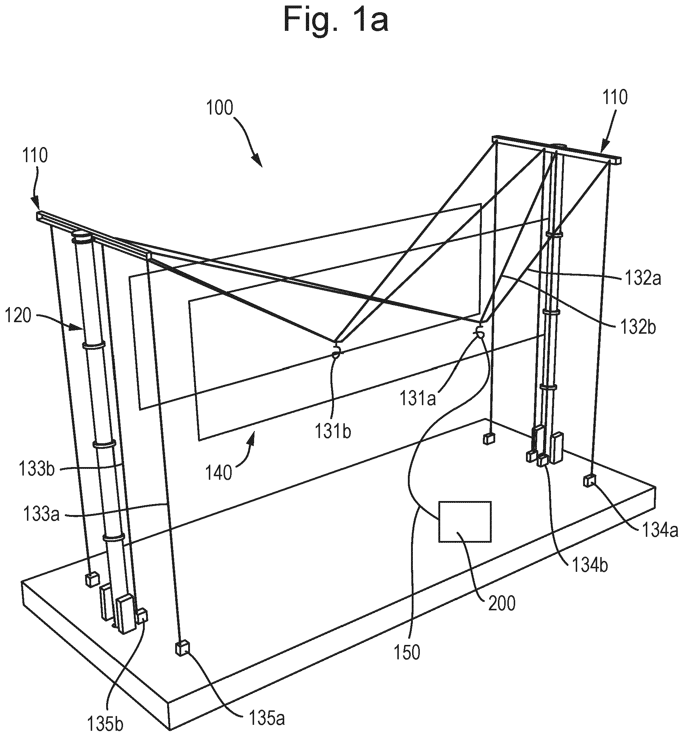

Figure 1a shows an embodiment (100) of the present invention. It comprises a gantry system (110) formed from a pair of substantially upright supports (120), each formed as a generally T-shaped member.

The embodiment (100) includes two separate target generator antennas (131a, 131b), each associated with one or more controller(s) (200), which comprise further components, both RF and digital processing units, to complete the TG. Other embodiments may comprise more or fewer TGs, as required.

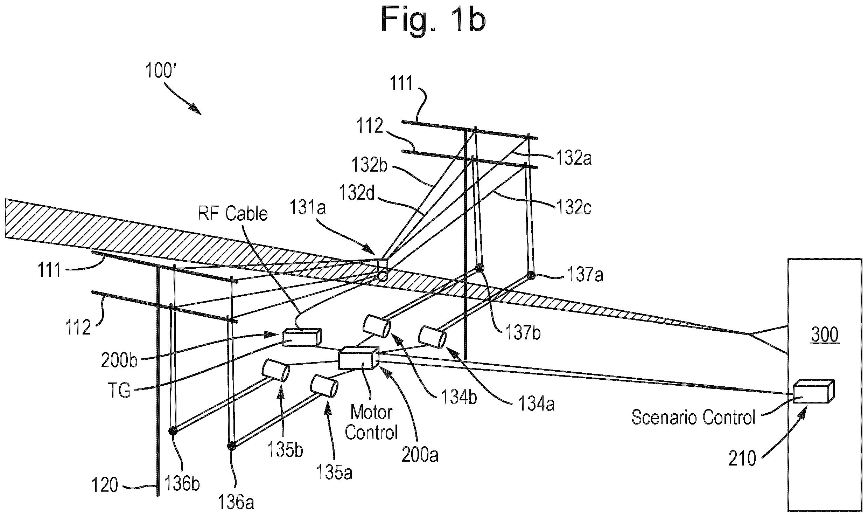

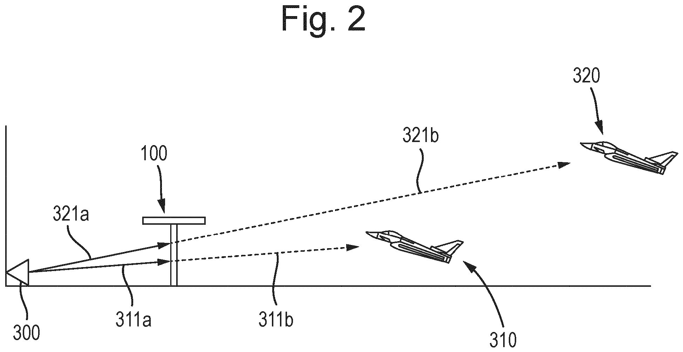

Each antenna (131a, 131b) comprises an antenna horn mounted on a gimbal system. The gimbal system is provided to ensure that the antenna horn maintains its orientation, pointing towards the RADAR. The gimbal system ensures that whatever the position of the antenna (131a, 131b) within the system, the horn of the respective antenna maintains an orientation which directs it towards the RADAR (300) (shown in Figures 1b and 2). Herein the entire antenna system, comprising a gimbal and possibly other support structures is referred to simply as "antenna" for convenience.

The following description refers to a single TG system (131a). The other system (131b) is substantially identical and so its operation is not described separately, unless this is necessary for clarity.

The antenna (131a) is suspended from 2 pairs of cables (132a, 132b, 133a, 133b) each of which passes through a pulley system at the top of each respective support (120). Each cable then runs substantially vertically to 2 pairs of motors (134a, 134b and 135a, 135b respectively), located at ground level. Each pair of motors typically operates in unison, but each pair is controlled independently of the other pair in a concerted manner to move the antenna (131a) in a plane of movement which is substantially vertical. By providing 2 pairs of cables, the stability of the antenna (131a) is improved. However, in some embodiments, a single cable on each side of the antenna (131a) may be sufficient.

Each motor is able to accelerate relatively rapidly in a highly controlled manner so that the antenna (131a) can assume a position within the plane of movement. The plane is illustrated in Figure 1 as (140). The antenna (131a) is able to assume any location in the plane (140) by selective control and operation of the respective motors.

The combination of cables, motors and associated controllers are herein referred to as a transport system.

The plane (140) is substantially orthogonal to a transmitted beam from the RADAR (300). In other words, the antenna (131a) is substantially a fixed distance from the RADAR (300) at all points in the plane. In practice, given that the plane is, by definition, planar, the distance at the edge of the plane to the RADAR will differ slightly to the distance at the centre of the plane, but if the overall distance of the plane (140) to the RADAR is large enough, this difference is not likely to be significant. In any event, any significant impact can be adjusted by means of RADAR Cross Section, RCS, modification during scenario design, described later.

The weight of the antenna (131a) is important, since it is this weight that provides a degree of stability. The actual weight can be selected according to the requirements of the particular embodiment. If the antenna (131a) is too light, then there may be insufficient stability and if too heavy, then it may not be possible to move the antenna sufficiently rapidly or, alternatively, a more powerful motor system is required. Optionally, a removable ballast may be incorporated to enable additional payloads (to be described later) to be added whilst maintaining a fixed mass of the assembly. Such a fixed mass ensures predictable dynamic behaviour.

The antenna (131a) may be connected by umbilical cable (150) to a controller (200). The umbilical cable may carry a power and/or RF signal to the antenna (131a) from the controller (200). The umbilical cable typically carries an RF signal captured by the antenna to the controller, and a modified version thereof is carried back to the antenna in the same umbilical cable. The configuration and weight of the cable (150) is arranged such that the presence of the cable (150) does not impede the movement of the antenna (131a). The umbilical cable (150) can make use of "RF over fibre" techniques to ensure suitable processing of the signals from the antenna. In another example, the umbilical cable may also be used to transmit data and/or power to a combined active TG and antenna.

In another embodiment, not illustrated, the antenna includes an integral power source and separate transceiver to transmit and receive signal to/from the controller (200), thereby obviating the need for an umbilical cable (150).

The umbilical cable (150) can be provided with Kevlar, or similar, shielding, to provide physical protection thereto.

Alternatively, the suspension cables (132a, 132b, 133a, 133b) may be adapted to carry power and/or data, enabling the system to utilise RF over fibre in order to transmit & receive RF and dispense with the umbilical cable (150)

Figure 1b shows a slightly different embodiment (100') to that shown in Figure 1a. In this embodiment, the positional control and stability of the antenna is improved by the use of additional cables connected to the antenna (131a). As shown, the antenna (131a) is connected to a total of 4 cables, two on each side, connected to relatively upper and lower parts of the antenna respectively. Only the cables shown on one side of the antenna are labelled, for clarity reasons.

Like numbered components in Figure 1b are the same or functionally similar to the corresponding components in Figure 1a.

For instance, the antenna is connected to cables (132a, 132b, 132c and 132) on one side. There are complementary cables on the other side, but not labelled here. The cables (132a-d) pass over pulleys on horizontal members (111 and 112) forming part of upright poles (120), and down to respective further pulleys (136a, 136b, 137a and 137b). From here, the cables are driven from motors (134a and 134b).

The motors are controlled by motor controller (200a). Motor controller (200a) is part of the controller (200), already mentioned. The other part of the controller is the TG Controller, (200b), which comprises all the components of the TG other than the antenna i.e. all the RF and DSP components. Together, the motor controller and TG Controller (200a and 200b) form the controller and communicate further with a Scenario Controller (210), described shortly.

Figure 1b also shows Radar (300), which is the unit under test, and which is used to illuminate the system (100,100').

The Scenario Controller, SC, (210), coordinates the movement of the antenna (131a) so that a particular scenario can be created and, in effect, synthesised for the RADAR (300). The term "scenario" in this context is used to represent the simulated movement of a target, such that the TG system as a whole is able to mimic the behaviour of a real target and so present the RADAR (300) with a realistic representation of the real target.

The SC (210) is able to synthesise a scenario from a simulation or to replay a trajectory of a genuine target from real-life behaviour which has been monitored and recorded.

The SC (210) controls the operation of the controller (200), which in turn controls, via (200a), the operation of the various motors (134a, 134b, 135a, 135b) to move the antenna in a defined and controlled manner within the confines of the system (100, 100'). It further controls the TG controller (200b) to process received signals from the RADAR (300) to attenuate and delay their retransmission back to the RADAR (300), to make the apparent target appear further from the RADAR than the real position of the antenna (131a). The TG controller (200b) may further Doppler process the signal received from the RADAR to impart a certain velocity characteristic to the virtual target.

The SC (210) controls other components as mentioned earlier. However, the SC has a role prior to running any particular scenario. Whether the SC (210) is running a genuine earlier recorded scenario, or implementing a simulation, the SC (210) ensures that the desired scenario is valid, i.e. that it is able to be represented by the system (100, 100') given the physical constraints within which it operates.

At a simple level, it is necessary to ensure that the virtual target remains within an area that can be represented by the physical dimensions of the system (100, 100'). This can be best seen by the plane (140) in Figure 1a. Extrapolating from the RADAR position (not shown in Figure 1a, but Figure 1b represents this in a similar way), the extreme corners of the apparent position of the target are extended from the RADAR by imagining a line passing from the RADAR through each corner of plane (140), which maps to a much larger plane several kilometres away. This much larger plane represents the useful area within which a simulation can be run.

The SC(210) ensures that a simulation operates within this area. If the SC(210) is assessing a real-life earlier scenario, then it may be amended to ensure that it fits within the available area.

Mention was made earlier of adjusting an RCS of a target to take account of its position within the plane. The SC (210) is able to do this to take account of the exaggerated effect of the distant virtual plane not being in conformance with a spherical surface. The difference between a straight line distance from the centre of plane 140 to RADAR (300) and the distance from a corner of plane 140 to the RADAR (300) is minimal. However, once the virtual plane is considered, this small distance is exaggerated and may become significant. To address this, the SC can adjust the signal generated by TG controller (200b) to account for this. This may involve changing the RCS of the virtual target as it moves across the virtual plane.

Figure 2 shows a schematic representation of the operation of the TG system (100) in an exemplary scenario. A RADAR transmitter/receiver (300) is positioned at a fixed location, perhaps as part of a test setup. An embodiment of the invention (100) comprising the system disclosed in Figure 1 is located at a fixed distance X₀ from the RADAR (300). The TG system (100) comprises a pair of antennas (131a, 131b) as described previously. This permits the TG system (100) to generate two separate virtual targets (310, 320).

The first virtual target (310) is generated by the RADAR (300) transmitting a signal indicated by arrow (311a). This signal illuminates the TG (100). The received signal is processed to represent one or more of a particular distance, velocity and trajectory, and a signal is then transmitted back to the RADAR (300), the signal being a delayed and attenuated version of the signal received. The amount of delay and attenuation provided is selected to represent a virtual target (310) at a distance X₁ from the RADAR, where X₁ is at a distance significantly remote from the TG (100). The dotted arrow (311b) indicates the apparent path taken by a signal transmitted from the RADAR (300) which would illuminate the virtual target (310) if it were an actual target.

The second virtual target is generated simultaneously in a similar manner. The second virtual target (320) is generated by the RADAR (300) transmitting a signal indicated by arrow (321a). This signal illuminates the TG (100). The received signal is processed as described previously and a signal is then transmitted back to the RADAR (300), the signal being a delayed and attenuated version of the signal received. The amount of delay and attenuation provided is selected to represent a target (320) at a distance X₂ from the RADAR, where X₂ is at a distance significantly remote from the TG (100). The dotted arrow (321b) indicates the apparent path taken by a signal transmitted from the RADAR (300) which would illuminate the virtual target (320) if it were an actual target.

The skilled person is familiar with the operation of a TG and so the details associated with the operation are not presented herein, since these are not germane to the operation of the present invention. The description herein is sufficient to understand the necessary operational features.

In essence, embodiments of the invention rely upon moving the TG in a controlled and accurate fashion, so that a virtual target can be made to appear at a greater range of locations. In principle, the entire TG device can be suspended and moved but, in practice, such an arrangement is likely to be prohibitively heavy and unwieldy. Hence, in a preferred embodiment, only a certain portion, namely the antenna, of the TG is suspended in the device, with the remainder of the device located in a static position, but communicatively coupled to the antenna.

Figure 2 illustrates the two antennas (131a) and 131b located at different heights with the structure of the TG system (100) so as to generate the two targets at different heights or elevations from the RADAR (300). The same separation or differentiation is achieved in azimuth by moving the respective antenna left or right between the two supports (110).

In this way, one or more virtual targets may be generated, depending upon the number of TG systems provided in the TG setup (100). The apparent position and magnitude of the returns provided to the RADAR (300) can thus be controlled to present the RADAR (300) with a realistic scenario, without the need to fly actual aircraft. This has a significant cost benefit, as well as an environmental benefit, by reducing the amount of fuel required in order to test or commission a particular RADAR. A great deal of the testing associated with product proving and commissioning can be performed using an embodiment of the invention without the need for an aircraft to become airborne.

Although described in terms of generating virtual airborne targets, embodiments of the invention can be used in other settings, particularly maritime. Although, one would not expect to see large variations in elevation for surface vessels, changes in azimuth can be modelled and simulated, as set out previously.

A further refinement which may be added to embodiments of the invention is the addition of Infra-red (IR) LEDs to the antenna (131a). Through the controlled illumination of such IR LEDs, it is possible to simulate a heat signature of a particular target, which can further enhance the range of information which is able to be synthesised and so make the virtual target appear more realistic.

Additionally, the provision of IR LEDs to the antenna (131a) allows the precise location of the antenna to be measured and tracked in real-time. A suitable sensor (not shown) may be provided at or near the SC (210) to provide this location information, which can be used to ensure that the antenna properly tracks the trajectory provided for in the particular scenario being implemented. This form of feedback ensures that the antenna movement matches that required by the scenario in use.

The above-described embodiment utilises two TGs, each operable independently of the other, but within the same overall system. In practice, there is no limit on the number of TGs which may be deployed. A possible issue may arise if one antenna obstructs another, but as the antennas are generally moving, any such obstruction is likely to be short-lived and, in any event, in a real-life situation, 100% reception cannot be guaranteed, so the problem associated with this, is unlikely to detract from the authenticity of the virtual set up.

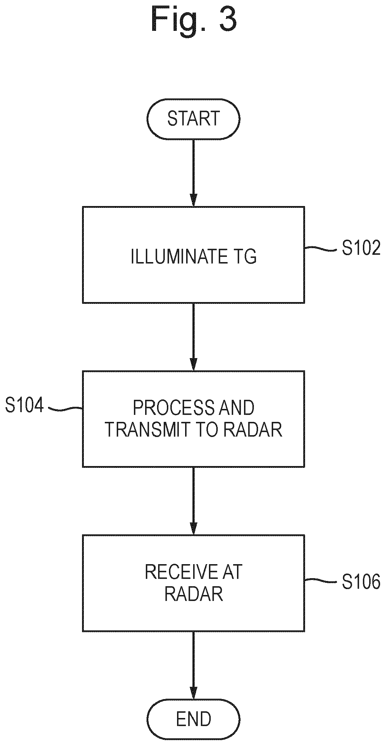

Figure 3 shows, for completeness, a flowchart illustrating the operation of the TG system (100). At step S102, the RADAR (300) transmits towards the TG system (100). At step S104, the individual antenna (131a) receives the transmission from the RADAR, the signal is passed to the controller (200) associated therewith, which then passes a signal back to the antenna (131a) for transmission towards the RADAR (300). At step S106, the RADAR (300) receives the signal and processes it as though it were transmitted from an actual target.

Alongside all of these steps, the antenna (131a) is moved in a controlled manner to simulate a flightpath of a given virtual target, which can appear at a controlled distance, elevation, azimuth and, optionally, speed. The information can be further enhanced by means of IR LEDs to model and simulate a heat signature.

## Claims

1. A virtual target generator system (100') for use with a RADAR system (300), comprising a transport system arranged to permit an antenna (131a) of a virtual target generator to assume a given position with reference to the RADAR (300), such that a generated virtual target (310) appears at a position dictated at least in part by the given position.

2. The virtual target generator system (100) according to claim 1, wherein the transport system is arranged to position the antenna (131a) of the virtual target generator to assume a position within a defined plane (140), wherein the plane is substantially orthogonal to a beam of a transmitter of the RADAR system (300).

3. The virtual target generator system (100) according to claim 1 or claim 2, wherein the transport system comprises a pair of cables (132a, 132b, 133a, 133b), each connected to opposed sides of the antenna (131a), and each cable is connected to a motor (134a, 134b, 135a, 135b) via a pulley system, thereby permitting movement of the antenna (131a).

4. The virtual target generator system (100) according to claim 3, wherein a pair of cables (132a, 132b, 133a, 133b) are connected to each side of the antenna (131a) and each of the pair of cables (132a, 132b, 133a, 133b) connected to each side is connected to its own motor (134a, 134b, 135a, 135b) via its own pulley system (136a, 136b, 137a, 137b).

5. The virtual target generator system (100) of any preceding claim wherein the antenna (131a) is connected via an umbilical cable (150) to a processing unit (200) located in a static position.

6. The virtual target generator system (100) of any preceding claim wherein the antenna (131a) is further provided with at least one Infra-red source.

7. The virtual target generator system (100) of any preceding claim comprising a plurality of antennas (131a, 131b), each associated with one of a plurality of virtual target generators.

8. The virtual target generator system (100) of any preceding claim comprising a Scenario Controller (210), the Scenario Controller (210) being arranged to control the system, such that the virtual target (310) appears to display one or more of a defined trajectory, position and speed.

9. The virtual target generator system of claim 8, wherein the Scenario Controller (210) is further operable to validate a particular scenario by ensuring that the particular scenario is supported by a physical arrangement of the virtual target generator system (100).

10. A method of operating the virtual target generator system of any preceding claim, comprising the steps of:
a) illuminating an antenna of the target generator system with a transmission from a RADAR (S102);
b) processing the received RADAR transmission and transmitting the processed signal to the RADAR (S104);
c) receiving the processed signal at the RADAR and processing it as a genuine target (S106); and
d) moving the antenna to simulate the motion of the genuine target (S108).

11. The method of claim 10 further comprising the step of validating a particular scenario to ensure that the particular scenario is supported by a physical arrangement of the virtual target generator system.
